(19) Europäisches Patentamt
European Patent Office
Office européen des brevets

(11) **EP 3 792 331 A1**

(12) **EUROPEAN PATENT APPLICATION**

(43) Date of publication:
**17.03.2021 Bulletin 2021/11**

(51) Int Cl.:
***C09K 8/528*** *(2006.01)*

(21) Application number: **20194904.7**

(22) Date of filing: **07.09.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.09.2019 DE 102019124453**

(71) Applicant: **ChemTechEnergy UG 29451 Dannenberg (DE)**

(72) Inventor: **Bobylev, Oleg 29451 Dannenberg (DE)**

(74) Representative: **Knoop, Philipp VKK Patentanwälte PartG mbB An der Alster 84 20099 Hamburg (DE)**

(54) **AGENT FOR SELECTIVE DEEPLY PENETRATING CHEMICAL DISSOLVING OF CLAY CAKE IN NEAR-WELLBORE FORMATION ZONE**

(57)     In order to increase the efficiency of removal of argillaceous mineral from clay cakes and near-wellbore zones of reservoirs a composition for selective deeply penetrating chemical dissolving of clay cake in near-wellbore formation zones, consisting of a sodium salt of ethylene diamine tetraacetatic acid, a surface-active substance and water, whereby the sodium salt of ethylene diamine tetracetatic acid is present with 2 - 15 per cent by weight of the composition and the surface-active substance is present with 0.1 - 1.0 per cent by weight of the composition is proposed.

Furthermore, a method of use of such a composition is proposed, comprising the steps of:
- injecting the composition in the well via the tubing string and pressing it into the formation with process water or formation water,
- keeping the composition in the formation for 4 - 8 hours,
- initiating a flow of the fluid.

EP 3 792 331 A1

**Description**

The invention described herein relates to the oil and gas industry, namely to mixtures used for chemical removal of clay cakes form near-wellbore zones of pay formations (NWBZ). The invention can prove most useful at fields where clay muds, including muds with aluminum and calcium compounds are used for drilling and penetration of pay reservoirs, as well as fields where reservoir rock includes argillaceous minerals.

One of the most efficient techniques of removal of clay cakes is chemical dissolving, whereby argillaceous minerals are dispersed, dissolved and removed from the target formation. Use of new, more powerful disperser, dissolver and stabilizer agents, as well as advances in technologies of their application contribute to further perfection of the technique as mentioned in RU 2160831 and RU 2120546. The teaching in said Patents has the following shortcomings:

- Apparently, there is a need to conduct bottom-hole treatments in two phases - first, inject a water solution of acid salts of alkali metals and potassium carbonate with addition of carbon dioxide with concentration of 0.5 - 3 percent (m/m), and then, during stage two, inject water solution of hydrochloric acid with potassium chloride with concentration of 0.2 - 2 percent (m/m), which is a complex process in terms of its technology;

- Use of hydrochloric acid during stage two means limitations in terms of time available for the treatment, because there is a need to prevent corrosion of casing strings, as well as pump equipment used in wells.

RU 2484244 discloses a well-known technique of chemical dissolving of clay cakes including preliminary running of tubing string up until lower perforations, creation of the initial pool of chemicals by way of injection of cake-dissolving chemicals in the well via the tubing string, holding of the chemical in the well, removal of the chemical, creation of another pool - water solution of acid, squeezing of the acid solution into the formation via the perforation area, removal (flushing out) of the second pool and flow initiation. That technique has a shortcoming similar to the aforementioned Patents - the job has to be handled in two stages and there is a need to use hydrochloric acid. However, in order to prevent exposure of casing string to adverse effects of the acid and high pressure, they use packer equipment.

There is another well-known technique of treatment of near-wellbore areas and removal of clay cakes from producer wells - namely injection of a working agent made from sodium naphthenate diluted with formation water or process water (RU 2172824). The shortcoming of that technique is a low efficiency, since sodium naphtenate only reduces surface tension at the liquid-rock interface rendering the formation water-repellent, but it leaves the clay component of the drilling mud and clay in the formation intact.

Another technique of removal of clay cakes from near-wellbore zones of formations as disclosed in RU 2425970, includes injection of a working agent and keeping it in the well for a while with subsequent initiation of oil flow. Injection of the working agent must take place in two batches of equal volume. The first batch uses the following chemical as cake-removing agent: water with 0.1 - 2 percent (m/m) of ML-81B (surface-active substance), 0.1 - 5 percent (m/m) of sodium hydroxide and 0.05-5 percent (m/m) of water-soluble polymer. The second batch uses the following chemical as cake-removing agent: water with 0.1 - 2 percent (m/m) of ML-81B (surface-active substance) and 0.1 - 5 percent (m/m) of sodium hydroxide. That technique is only efficient when formations have two zones - a zone with high permeability and a zone with low permeability. The shortcoming of that technique is a low degree of interaction of the working chemical agent with argillaceous minerals underneath films of hydrocarbons. Such films hinder the complete cleanup of the pore space and assurance of inflow of oil, because the working chemical agent interacts with the oil itself.

Kaolinite is the mineral which reacts most violently and actively with sodium hydroxide, whereas montmorillonite and hydromica demonstrate least violent reactions. Chemical reaction of an argillaceous mineral [M] with alkali in alkaline environment takes place as follows: additional dissociating of hydroxide surface structures takes place, as per the below pattern:

$$[M]\text{-}OH \rightarrow [M]\text{-}O\text{-}H^+ \qquad (1)$$

with subsequent exchange of $H^+$ for $Na^+$ from the alkali solution and generation of water:

$$[M]\text{-}O\text{-}H^+ + NaOH \rightarrow [M]\text{-}O\text{-}Na^+ + H_2O. \qquad (2)$$

Hence, the implantation of OH-ion from the alkali solution in the coordination sphere of atoms of Al and Si in aluminosilicates triggers the destruction of Si - O - Al bonds, and then of Si - O - Si bonds and releases silicon oxide and aluminum oxide from the lattice into the solution (in case of kaolinite):

$$Al_2Si_2O_5(OH)_4 + 10NaOH \rightarrow 2NaAl(OH)_4\text{*}nH_2O + 4Na_2O\text{*}\,SiO_2\text{*}nH_2O \qquad (3)$$

or

$$Al_2Si_2O_5(OH)_4 + 10(OH)^- \rightarrow 2Al(OH)_4^- + 4SiO_4^{4-} + 3nH_2O \qquad (4)$$

with a subsequent formation of a new solid phase, namely of sodium hydroalumosilicate of a sodalite type by a condensation mechanism:

$$2Al(OH)_4^- + 2SiO_4^{4-} + 2Na^+ \rightarrow [Na_2O * Al_2O3 * 2SiO_2]*n H_2O \qquad (5)$$

Hence, a solid water-insoluble substance is generated, which, according to some patents, must be dissolved with hydrochloric acid during phase two of the near-wellbore zone treatments.

Because of the need to conduct the clay removal in two phases and the need of hydrochloric acid during phase two, most common agents are powerful acid reagents destroying only carbonate components of reservoirs with subsequent washing-away of argillaceous components together with by-products of chemical reactions.

The prototype / technical solution closest to the invention described herein is an acid inhibiting emulsification named KSPEO-2, (technical specification # 2122-056-53501222-2006, http://www.polyex.perm.ru/kspeo-2 - RU2425970) with a surface-active substance, hydrochloric acid and water. In this agent an additional component is present, namely acetic acid. The surface-active substance is a product of the interaction of tertiary amines and hydrocarbon peroxide with the following shares of ingredients (m/m percent): product of interaction of tertiary amines and hydrocarbon peroxide: 0.03 - 0.3; acetic acid - 2.5 - 3.0; hydrochloric acid - 10.0 - 24.0; water - the rest. The said agent assures low interfacial tension at the solution-oil boundary inhibiting formation of stable oil-acid emulsions. The shortcomings of the above technique are a high rate of reaction with carbonates, a non-availability of selectivity of treatment of oil-saturated reservoirs, secondary precipitation of products of chemical reaction between the acid and the formation rock reducing permeability.

The goal of the invention described herein is the increase of efficiency of removal of argillaceous mineral from clay cakes and near-wellbore zones of reservoirs.

To achieve this objective, the invention suggests a composition and a method of applying the composition for removal of argillaceous mineral from clay cake.

The composition consists of of a sodium salt of ethylene diamine tetraacetic acid, a surface-active substance and water, whereby the sodium salt of ethylene diamine tetraacetic acid is present with 2 - 15 per cent by weigth of the composition and the surface-active substance is present with 0.1 - 1.0 percent by weight of the composition.

In a preferred embodiement, the composition contains sodium salt of ethylene diamine tetraacetic acid with 5 - 10 per cent by weight of the composition and the surface-active substance with 0.25 - 0.5 per cent by weight of the composition.

The surface-active substance (SAS) used in the claimed composition is chosen from a group consisting of anionic, cationic, zwitterionic or nonionic surfactants, alone or in combination, especially from sulfonates, phosphate esters, carboxylates, ethoxylates, fatty acid esters of polyhydroxy compounds, aminoxides, sulfoxides. More specifically, the SAS was anionic and especially taken from the sulfonates.

The sodium salt of ethylene diamine tetraacetic acid (EDTA) is EDTA-2Na, EDTA-4Na or a mixture of both, preferred EDTA-2Na alone. EDTA-2Na is in the common, commercially available form and was obtained from BASF AG. The most preferred embodiement of the invention is EDTA-2Na with 5 per cent by weight of the composition and a sulfonate as an anionic SAS with 0.25 per cent by weight, the rest being water.

The claimed method of use of this composition comprises the steps of: injecting the composition in the well via the tubing string and pressing it into the formation with process water or formation water, keeping the composition in the formation for 4 - 8 hours, initiating a flow of the fluid. This is sufficient to chemically dissolving the clay cake.

Additionally, the method may comprise the steps of pre-heating the composition to reservoir temperature level before injecting it. Substantially higher temperatures are not effective.

The claimed composition may be produced in situ at the site of the well by combining a dry premixture of EDTA-2Na and SAS with the correct amount of water or it may be pre-mixed ready for use at a factory. In the latter case, it should not be stored in metal containers.

The above mentioned percentages by weight were tested and optimized in the course of laboratory testing of dispersion of clay cakes or argillaceous minerals of formation rock at reservoir temperature.

In the course of laboratory testing of the aforementioned agent the applicant, quite unexpectedly, identified another useful feature of the agent - difference of stimulation of oil-saturated and water-saturated intervals and greater depth of stimulation, compared to hydrochloric acid.

The principal active component of the aforementioned composition is disodium salt of ethylene diamine tetraacetic acid. It is conceivable that EDTA-2Na and molecules of SAS form interim compounds with a non-saturated coordination which, in turn, easily interacts with carbonates and aluminosilicates converting those into soluble compounds by way of a replacement of $Ca^{2+}$ and $Al^{2+}$ ions with $Na^+$ and producing sodium carbonate and sodium silicate, as well as chelate complexes with calcium ions and aluminium ions inside EDTA, especially the calcium salt of ethylene diamine tetraacetatic acid, and the aluminum salt of ethylene diamine tetraacetatic acid.

With regard to the claimed method of use of the above mentioned composition, the following sequence is proposed: first, a working solution of EDTA-2Na is prepared with 5-10 percent by mass (m/m) of the agent and 0.25-0.5 percent m/m of SAS. The working solution is injected in the well via the tubing string and squeezed into the formation with a pre-defined amount of process water or formation water. The solution is kept in the formation for 4 - 8 hours, and then a flow of the fluid is initiated. Applicant resorted to laboratory testing, to confirm the efficiency of the claimed composition and studied the degree of impact of concentration of EDTA-2Na in the working solution upon the extent / degree of dispersion of a carbonate reservoir with argillaceous minerals in $C_1t_2$-III$_\pi$ formation of the Yuzhno-Yuryakhinskoe field.

Examples

Example 1 (Prototype).

A carbonate formation with argillaceous minerals - water-insoluble rock encountered in oil reservoirs (well # 107, $C_1t_2$-III formation of the Yuzhno-Yuryakhinskoe field, sampling depth - 2,545.0 m) - organogenic detritus limestone with inconsistent dolomitization and inconsistent content of clay.

Composition of hydrochloric acid-based agent (KSPEO-2) proposed for removal of carbonates with argillaceous minerals from near-wellbore zone of the well is as follows (percent m/m):

| | |
|---|---|
| Product of interaction of tertiary amines and hydrocarbon peroxide | 0.15 |
| Acetic acid | 2.5 |
| Hydrochloric acid | 12.0 |
| Water | rest |

Composition of EDTA-2Na-based agent proposed for removal of carbonates with argillaceous minerals from near-wellbore zone of the well is as follows (percent m/m):

| | |
|---|---|
| EDTA-2Na | 5.0 |
| SAS (sulfonate) | 0.25 |
| Water | rest |

Testing objective - assessment of rate of dissolution and removal of the carbonate component with EDTA-2Na-based agent.

Testing methodology:

Samples of EDTA-2Na-based agent with a variety of concentrations and samples of KSPEO-2-based agent were put in 100 mL glass beakers and put in a drying cabinet pre-heated to reservoir temperature level (54 °C). Samples of agents were exposed to reservoir temperature for 15 minutes. After that, cube-shaped samples of carbonate rock made from well core samples were put in the beakers for 10 minutes. Then rock samples were extracted from the solutions and put for one minute in 3-percent solution of sodium hydroxide, in order to neutralize the acid. Same samples of working agents were then used for next cube-shaped samples of carbonate rock, but the time of explosion was different - 30 minutes, 90 minutes and 300 minutes. Table 1 highlights the results of these experiments.

**Dissolution of carbonate core with KSPEO-2-based working agent and with EDTA-2Na-based working agent**

Table 1.

| # | Composition, concentration (m/m) | Core dissolution rate, g/m2*hr | | | |
|---|---|---|---|---|---|
| | | 10 minutes | 30 minutes | 90 minutes | 300 minutes |
| 1 | KSPEO-2, 12.0 % (for HCl) | 23,680 | Complete dissolution of cube-shaped samples | | |
| 2 | EDTA-2Na, 5.0 % | 505 | 242 | 65.5 | 4.9 |
| 3 | EDTA-2Na, 10.0% | 820 | 435 | 124 | 11.8 |

The data summarized in Table 1 demonstrate, that the rate of dissolution of carbonate core exposed to EDTA-2Na-based working agent is 28.9 (10 percent concentration) or 46.9 (5 percent concentration) times lower than that of core exposed to KSPEO-2. Lower rate of EDTA-2Na-based agent means deeper penetration of the solution into formation and, consequently, increase of efficiency of the treatment.

Example 2.

A carbonate formation with argillaceous minerals - water-insoluble rock encountered in oil reservoirs ($C_1t_2$-III formation of the Yuzhno-Yuryakhinskoe field).

Composition of EDTA-2Na proposed for removal of carbonates with argillaceous minerals from near-wellbore zone of the well is as follows (percent m/m):

| E DTA-2 N a | 5.0-10.0 |
|---|---|
| SAS | 0.25-05 |
| Water | rest |

Testing objective - assessment of impact of EDTA-2Na-based agent upon reservoir matrix rock (samples of core with 100-percent water saturation):

Testing methodology:

a) Establishment of initial permeability - filtration of reservoir fluid through a sample of core in the "reservoir - well" direction up until stabilization of the system pressure (amount no less than 3 $V_{por}$) with subsequent establishment of permeability value ($K_{perm1}$);

b) Simulation of injection of an acid-based reagent:

1) Filtration of EDTA-2Na-based agent through a sample of core in the "well-reservoir" direction up until a "breakthrough" - generation of a high permeability channel and/or a well-pronounced drop of injection pressure, but no more than 5 $V_{por}$ at 0.1 cm$^3$/minute rate (the rate of injection must suffice to assure reaction of rock with the EDTA-2Na-based agent, whose feature is rate of dissolution of rock many times lower than that of other agents);

2) Stabilization of the acid-based agent in the pore space at reservoir conditions up until 4 hours (time required for stabilization of the agent was established based upon "free volume" studies).

c) Establishment of permeability upon injection of the acid-based agent - filtration of reservoir fluid through a sample of core in the "reservoir - well" direction up until stabilization of the system pressure (amount no less than 3 $V_{por}$) with subsequent establishment of permeability value ($K_{perm2}$);

d) Establishment of return permeability ($K_{ret.perm}$) per the below equation:

$$K_{ret.perm} = \frac{K_{perm2}}{K_{perm1}} \qquad\qquad (I)$$

where $K_{ret.perm}$ is return permeability upon injection of acid-based agent (measured in points);

$K_{perm1}$ is initial permeability, mD; and

$K_{perm2}$ is permeability upon injection of the agent, mD.

Drops of pressure, amounts of fluid pumped and pumping time, as well as rate of filtration were recorded in the course of testing.

Table 2 highlights results of the experiment.

**Results of filtration testing performed in order to assess impact of EDTA-2Na-based acid agent upon matrix rock of a water-saturated formation**

Table 2

| # | Core sample | Permeability (gas), $K_{perm.\ gas}$ mD | Permeability (water) before injection of acid-based agent, $K_{perm.\ water1}$, mD | Volume of injection of acid-based agent, cm$^3$ (Vpor) | Permeability (water) upon injection of acid-based agent, $K_{perm.\ water2}$, mD | $K_{ret.\ perm}$ ($K_{perm.\ water2}$/ $K_{perm.\ water1}$), points |
|---|---|---|---|---|---|---|
| Concentration - 5 percent | | | | | | |
| 1 | 3-224-15 | 12.72 | 1.4 | 3.15 (5) | 2.8 | 2.00 |
| 2 | 6-5-16 | 12.86 | 2.8 | 13.00 (5) | 3.0 | 1.07 |
| Concentration - 10 percent | | | | | | |
| 1 | 3-81-15 | 10.55 | 1.6 | 3.11 (5) | 2.6 | 1.63 |
| 2 | 6-41-16 | 12.02 | 2.7 | 13.25 (5) | 3.0 | 1.11 |

The results of the filtration testing targeting cube-shaped plugs of water-saturated core sampled at C1t2-III formation of the Yuzhno-Yuryakhinskoe field suffice to establish that the formation water model demonstrates growth of permeability upon injection of EDTA-2Na-based acid agent. The continuous growth of the injection pressure was observed in the course of filtration of the acid agent. The absence of "breakthroughs" was the result of the low pace of injection of acid agent and its exhaustion at the inlet of the sample. Traces of dissolution of formation rock at the surfaces of "well" sides of core samples attest to the actual chemical reaction between the acid agent and the formation rock.

Example 3.

A carbonate formation with argillaceous minerals - water-insoluble rock encountered in oil reservoirs ($C_1t_2$-III formation of the Yuzhno-Yuryakhinskoe field).

Composition of EDTA-2Na proposed for removal of carbonates with argillaceous minerals from near-wellbore zone of the well is as the same as above (percent m/m):

| E DTA-2 N a | 5.0-10.0 |
|---|---|
| SAS | 0.25-0.5 |
| Water | rest |

Testing objective - assessment of impact of EDTA-2Na-based agent upon reservoir matrix rock in the course of stimulation of oil-saturated formations.

The testing methodology is identical to the methodology described for example 2.

Table 3 highlights results of the experiment.

**Results of filtration testing performed in order to assess impact of EDTA-2Na-based acid agent upon matrix rock of an oil-saturated formation**

Table 3.

| # | Core sample | Permeability (gas), $K_{perm.\ gas}$, mD | Permeability (oil) before injection of acid-based agent, $K_{perm.\ oil1}$, mD | Volume of injection of acid-based agent, cm$^3$ (Vpor) | Permeability (oil) upon injection of acid-based agent, $K_{perm.\ oil2}$, mD | $K_{ret.\ perm}$ ( $K_{perm.\ oil2}$/ $K_{perm.\ oil1}$), points |
|---|---|---|---|---|---|---|
| Concentration - 5 percent | | | | | | |
| 1 | 6-38-16 | 13.38 | 0.27 | 7.5 (2.14) | 520 | 1,925.93 |
| 2 | 3-253-15 | 54.46 | 0.35 | 4.6 (2.42) | 77 | 220.00 |
| Concentration - 10 percent | | | | | | |
| 1 | 6-40-16 | 25.64 | 0.33 | 11.8 (3.97) | 575 | 1,742.42 |
| 2 | 6-13-16 | 58.98 | 0.39 | 12.65 (5) | 90 | 230.77 |

The results of the filtration testing targeting cube-shaped plugs of oil-saturated core sampled at C1t2-III formation of the Yuzhno-Yuryakhinskoe field suffice to establish that the formation oil model demonstrates growth of permeability upon injection of EDTA-2Na-based acid agent:

a) the values of $K_{ret.\ Perm}$ for 5 percent concentration are 220.0 and 1,925.93 points;

b) the values of $K_{ret.\ Perm}$ for 10 percent concentration are 230.77 and 1,742.42 points.

Compared to water-saturated samples of core, the pace of dissolution of rock is lower, because of presence of oil at the surface of pores, and the advance of active acid agent (i.e. agent yet to enter into a chemical reaction) further into pore space is better pronounced. The process triggers "breakthroughs". There were no principal channels of dissolution, since the sides of the core sample had been subjected to identical treatment in the course of preparations for the testing. It is conceivable that injection of EDTA-2Na-based agent triggers formation of multi-channel structures of dissolutions, as well as increase of conductivity of natural fractures. five percent (m/m) solution of EDTA-2Na is most powerful.

Example 4.

A carbonate formation with argillaceous minerals - water-insoluble rock encountered in oil reservoirs ($C_1t_2$-III formation of the Yuzhno-Yuryakhinskoe field).

Composition of hydrochloric acid-based agent (KSPEO-2) proposed for removal of carbonates with argillaceous minerals from near-wellbore zone of the well is as follows (percent m/m):

| | |
|---|---|
| Product of interaction of tertiary amines and hydrocarbon peroxide | 0.15 |
| Acetic acid | 2.5 |
| Hydrochloric acid | 12.0 |
| Water | rest |

Composition of EDTA-2Na proposed for removal of carbonates with argillaceous minerals from near-wellbore zone of the well is as follows (percent m/m):

| E DTA-2 N a | 5.0 |
|---|---|
| SAS | 0.25 |
| Water | rest |

Testing objective - assessment of depth of impact of KSPEO-2-based agent and EDTA-2Na-based agent upon reservoir matrix rock (four-piece oil-saturated core samples).

Testing methodology:

a) Establishment of initial permeability of single samples of core and permeability of the entire multi-piece model before injection of the agent - filtration of reservoir fluid through samples of core in the "reservoir - well" direction up until stabilization of the system pressure (amount no less than 3 $V_{por}$) with subsequent establishment of permeability value ($K_{perm1}$)

b) Simulation of injection of an agent:

1) Filtration of the agent through samples of core in the "well-reservoir" direction at 0.1 $cm^3$/min injection rate:

- In the course of testing of EDTA-2Na-based agent (concentration - 5 percent) - up until appearance at the outlet of the model, but no more than one $V_{por}$;

- In the course of testing of acid agent (HCl with concentration of 12 percent) used conventionally - the volume of injection is identical to that of EDTA-2Na-based agent.

2) Stabilization of the acid-based agent in the pore space at reservoir conditions for 4 hours (time required for stabilization of the agent was established based upon "free volume" studies)

c) establishment of permeability of the multi-piece model, as well as single core samples upon injection of the agent - filtration of reservoir fluid through the samples of core in the "reservoir - well" direction up until stabilization of the system pressure (amount no less than 3 $V_{por}$) with subsequent establishment of permeability value ($K_{perm2}$);

a) Establishment of return permeability ($K_{ret.perm}$) for the multi-piece model, as well as single core samples.

Table 4 highlights results of the experiment.

**Results of filtration testing performed in order to assess impact of EDTA-2Na-based agent and KSPO-2-based agent upon permeability of multi-piece core model to oil**

Table 4.

| # | Core sample | Permeability (oil) before injection of acid-based agent, $K_{perm. oil1}$, mD | Volume of injection of acid-based agent, $cm^3$ ($V_{por}$) | Permeability (oil) upon injection of acid-based agent, $K_{perm. oil2}$, mD | $K_{ret. perm}$ ($K_{perm. oil2}$/ $K_{perm. oil1}$), points |
|---|---|---|---|---|---|
| Model # 1; EDTA-2Na concentration - 5 percent (m/m) | | | | | |
| 1 | 6-4-16 | 1.51 | - | 1.25 | 0.83 |
| 2 | 6-7-16 | 1.30 | - | 0.82 | 0.63 |
| 3 | 6-12-16 | 0.47 | - | 0.65 | 1.38 |

(continued)

| # | Core sample | Permeability (oil) before injection of acid-based agent, $K_{perm.\ oil1}$, mD | Volume of injection of acid-based agent, $cm^3$ ($V_{por}$) | Permeability (oil) upon injection of acid-based agent, $K_{perm.\ oil2}$, mD | $K_{ret.\ perm}$ ($K_{perm.\ oil2}$/ $K_{perm.\ oil1}$), points |
|---|---|---|---|---|---|
| Model # 1; EDTA-2Na concentration - 5 percent (m/m) | | | | | |
| 4 | 6-2-16 | 0.43 | - | 586.00 | 1362.79 |
| 5 | Model # 1 | 0.35 | 13(1) | 2.28 | 6.51 |
| Model # 2; KSPEO-2 concentration (HCI) - 12 percent (m/m) | | | | | |
| 1 | 6-6-16 | 1.21 | - | 1.10 | 0.91 |
| 2 | 6-1-16 | 1.05 | - | 0.84 | 0.80 |
| 3 | 6-39-16 | 0.32 | - | 0.10 | 0.31 |
| 4 | 3-226-15 | 0.27 | - | 93.00 | 344.44 |
| 5 | Model # 2 | 0.40 | 12 (1) | 1.10 | 2.75 |
| Model # 3; EDTA-2Na concentration - 5 percent (m/m) | | | | | |
| 1 | 6-14-16 | 1.59 | - | 1.33 | 0.83 |
| 2 | 6-16-16 | 1.24 | - | 0.86 | 0.69 |
| 3 | 6-27-16 | 0.96 | - | 1.48 | 1.54 |
| 4 | 6-31-16 | 0.24 | - | 165.98 | 691.59 |
| 5 | Model # 3 | 0.30 | 13(1) | 0.85 | 2.83 |
| Model # 4; 12 % KSPEO-2 concentration (HCI) - 12 percent (m/m) | | | | | |
| 1 | 3-204-15 | 0.48 | - | 0.35 | 0.73 |
| 2 | 3-265-15 | 0.36 | - | 0.21 | 0.58 |
| 3 | 6-48-16 | 0.22 | - | 0.07 | 0.32 |
| 4 | 3-47-15 | 0.16 | - | 64.80 | 405.00 |
| 5 | Model # 4 | 0.24 | 11.29(1) | 0.64 | 2.67 |

Results of the aforementioned filtration testing suffice to establish the following:

1. Growth of permeability was observed in the course of injection of hydrochloric acid-based agent (KSPEO-2) only for the first one of the four core samples. With that, permeability of the second core sample dropped more than three times, which is a sign of considerable contamination with products of chemical reaction between hydrochloric acid and carbonate rock. The cumulative growth of the multi-piece model is 2.67-2.75 times.

2. Growth of permeability was observed in the course of injection of EDTA-2Na-based agent for the first and the second core samples out of the four. With that, permeability of the third core sample dropped no more than 1.5 times, which is a sign of partial contamination with products of chemical reaction between the agent and rock. The cumulative growth of the multi-piece model is 2.83-6.51 times, which is 1.06-2.37 times more than that of injection of hydrochloric acid-based agents.

Hence, the agent introduced herein suffices to assure increase of efficiency of wells' treatment - both in terms of depth of penetration of the treatment agent, and in terms of degree of the treatment, due to chemical interaction of EDTA-2Na with carbonates and aluminosiliocates, which the chemical converts into soluble compounds by way of replacement of $Ca^{2+}$ and $Al^{2+}$ ions with $Na^+$ producing sodium carbonate and sodium silicate and chelate complexes with calcium ions (calcium salt of ethylene diamine tetraacetatic acid) and aluminum (aluminum salt of ethylene diamine tetraacetatic acid) inside. The chemical also helps remove dissolved products of the reaction from near-wellbore areas and increase the degree of near-wellbore zone treatment.

**Claims**

1. Composition for for selective deeply penetrating chemical dissolving of clay cake in near-wellbore formation zones, consisting of a sodium salt of ethylene diamine tetraacetic acid, a surface-active substance and water, whereby the sodium salt of ethylene diamine tetracetatic acid is present with 2 - 15 per cent by weight of the composition and the surface-active substance is present with 0.1 - 1.0 per cent by weight of the composition.

2. Composition according to claim 1, **characterized in that** the sodium salt of ethylene diamine tetraacetic acid is present with 5 - 10 per cent by weight of the composition and the surface-active substance is present with 0.25 - 0.5 per cent by weight of the composition, preferably, the sodium salt of ethylene diamine tetraacetic acid is present with 5 per cent by weight of the composition and the surface-active substance is present with 0.25 per cent by weight of the composition.

3. Composition according to claim 1 or 2, **characterized in that** the surface-active substance (SAS) is chosen from a group consisting of anionic, cationic, zwitterionic or nonionic surfactants, alone or in combination, especially from sulfonates, phosphate esters, carboxylates, ethoxylates, fatty acid esters of polyhydroxy compounds, aminoxides, sulfoxides, preferably the SAS is chosen from the sulfonates.

4. Composition according to claim 1, 2 or 3, **characterized in that** the sodium salt of ethylene diamine tetraacetatic acid is EDTA-2Na, EDTA-4Na or a mixture of both, preferred EDTA-2Na alone.

5. Method of use of a composition according to claims 1 to 4, comprising the steps of:

   - injecting the composition in the well via the tubing string and pressing it into the formation with process water or formation water,
   - keeping the composition in the formation for 4 - 8 hours,
   - initiating a flow of the fluid.

6. Method according to claim 5, further comprising the step of pre-heating the composition to reservoir temperature level.

Europäisches
Patentamt

European
Patent Office

Office européen
des brevets

# EUROPEAN SEARCH REPORT

Application Number

EP 20 19 4904

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2015 0046679 A (BULLSONE CO LTD) 30 April 2015 (2015-04-30) * claims * | 1,3,4 | INV. C09K8/528 |
| X | CN 106 634 914 A (UNIV SOUTHWEST PETROLEUM) 10 May 2017 (2017-05-10) * claims * * examples * | 5,6 | |
| A | US 2004/173353 A1 (TODD BRADLEY L [US]) 9 September 2004 (2004-09-09) * claims * | 1-6 | |
| A | US 2012/279711 A1 (COLLINS NATALIA [US] ET AL) 8 November 2012 (2012-11-08) * claims * | 1-6 | |
| A | US 9 834 722 B2 (HALLIBURTON ENERGY SERVICES INC [US]) 5 December 2017 (2017-12-05) * claims * | 1-6 | TECHNICAL FIELDS SEARCHED (IPC)  C09K |

The present search report has been drawn up for all claims

| Place of search | Date of completion of the search | Examiner |
|---|---|---|
| Munich | 18 January 2021 | Zimpfer, Emmanuel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 19 4904

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2021

| Patent document cited in search report | | Publication date | Patent family member(s) | | Publication date |
|---|---|---|---|---|---|
| KR 20150046679 | A | 30-04-2015 | NONE | | |
| CN 106634914 | A | 10-05-2017 | NONE | | |
| US 2004173353 | A1 | 09-09-2004 | US 2004173353 A1 | | 09-09-2004 |
| | | | US 2005261137 A1 | | 24-11-2005 |
| | | | WO 2004079156 A1 | | 16-09-2004 |
| US 2012279711 | A1 | 08-11-2012 | CA 2833522 A1 | | 08-11-2012 |
| | | | EA 201391588 A1 | | 30-04-2014 |
| | | | EP 2705112 A1 | | 12-03-2014 |
| | | | US 2012279711 A1 | | 08-11-2012 |
| | | | WO 2012150435 A1 | | 08-11-2012 |
| US 9834722 | B2 | 05-12-2017 | NONE | | |

EPO FORM P0459

For more details about this annex : see Official Journal of the European Patent Office, No. 12/82

## REFERENCES CITED IN THE DESCRIPTION

**Patent documents cited in the description**

- RU 2160831
- RU 2120546
- RU 2484244
- RU 2172824
- RU 2425970